# EUROPEAN PATENT APPLICATION

(11) **EP 2 693 767 A2**
(43) Date of publication of application: **05.02.2014**
(21) Application number: 13178290.6
(22) Date of filing: 26.07.2013
(51) Int. Cl.: H04N 21/485

(54) **Image processing apparatus and image processing method thereof**

(30) Priority: 31.07.2012 KR 20120084056
(71) Applicant: Samsung Electronics Co., Ltd, Gyeonggi-do 443-742 (KR)
(72) Inventor: Lee, Sang-min, Seoul (KR)
(74) Representative: Fearnside, Andrew Simon

(57) **Abstract**

An image processing method of an image processing apparatus and image processing apparatus are provided. The method includes receiving streaming image data (S510), decoding the received streaming image data to generate a plurality of consecutive frames (S520), detecting a resolution-changed frame among the plurality of generated consecutive frames (S530), and scaling the plurality of generated consecutive frames using a preset scaling factor (S540). The scaling includes changing the preset scaling factor to a scaling factor corresponding to a resolution of the detected resolution-changed frame just before the detected resolution-changed frame is scaled.

## Description

### CROSS-REFERENCE TO RELATED APPLICATIONS

This application is related to, and claims priority to Korean Patent Application No. 10-2012-0084056, filed on July 31, 2012, in the Korean Intellectual Property Office, the disclosure of which is incorporated herein by reference in its entirety.

### BACKGROUND

### 1. Field

Embodiments of the present invention relate to an image processing apparatus and an image processing method thereof, and more particularly, to an image apparatus which processes streaming image data and an image processing method thereof.

### 2. Description of the Related Art

Optical discs capable of large capacity of data have been widely used as recording media. However, with increase in demands on high quality of video data and high quality of sound data, high-definition recording media with larger capacity of data storage are desired. For example, when image data corresponding to a high-definition television (HDTV)-graded movie is recorded on a disc with a picture quality of moving picture experts group (MPEG) 2, a high-definition recording media with data storage capacity of above 20 GBytes is are needed.

In view of the demands, a blu-ray disc (BD), a high-definition digital versatile disc (HD-DVD), and the like have been developed as next-generation recording media. Further, optical recording and reproducing apparatuses applying the high-definition recording medium standard are being developed.

With the development of the optical recording and reproducing apparatuses, a reproducing function of streaming data may be added. Streaming data may be defined as a data format capable of transmitting and simultaneously reproducing multimedia contents that are not in storage media such as a compact disc (CD) or a hard disc drive (HDD), but in a broadcasting environment using a wired/wireless network.

As a service associated with provision of the streaming data, a video on demand (VOD) service is becoming more common in the digital TV (DTV) or audio/video player product fields and increasingly important. The VOD service is a customized image information service that receives the streaming data form a VOD service provider and provides data required to a user at a desired time.

Some VOD service providers control a resolution of an image according to network speed and transmit the image for a viewer's convenience.

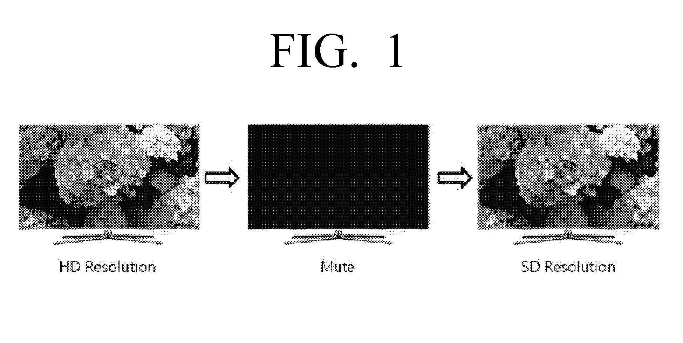

However, when the VOD service provider controls the resolution of the image and transmits the image, mute processing may be performed as illustrated in FIG. 1 to prevent a screen displayed in a displayer of a reception side from being split or from being abnormally output.

However, as the resolution may be frequently changed due to instability of a network speed, a mute section may occur frequently and cause flickering that is a problem to viewers.

### SUMMARY

An exemplary embodiment of the present invention may overcome the above disadvantages and other disadvantages not described above. According to the present invention there is provided an apparatus and method as set forth in the appended claims. Other features of the invention will be apparent from the dependent claims, and the description which follows.

An exemplary embodiment of the present invention provides an image processing apparatus that changes a preset scaling factor to a scaling factor corresponding to changed resolution of a frame and an image processing method thereof.

According to an aspect of an exemplary embodiment, an image processing method of an image processing apparatus is provided. The method may include receiving streaming image data, decoding the received streaming image data to generate a plurality of consecutive frames, detecting a resolution-changed frame among the plurality of generated consecutive frames, and scaling the plurality of generated consecutive frames using a preset scaling factor. The scaling may include changing the preset scaling factor to a scaling factor corresponding to a resolution of the detected resolution-changed frame just before the detected resolution-changed frame is scaled.

The generating a plurality of frames may include decoding the received streaming image data to generate the plurality of frames and storing the plurality of generated frames in a plurality of decoding buffers, and sequentially storing the plurality of stored frames in a plurality of frame buffers according to a frame sequence.

The generating a plurality of frames may include performing image processing for improvement in picture quality on the plurality of frames stored in the plurality of decoding buffers. The storing the plurality of stored frames in the plurality of frame buffers may include sequentially storing the plurality of image-processed frames in the plurality of frame buffers. The detecting a resolution-changed frame may include detecting resolutions of the plurality of frames and detecting the resolution-changed frame among the plurality of frames, in the decoding the received streaming image data.

The scaling may include changing the preset scaling factor to the scaling factor corresponding to the resolution of the detected resolution-changed frame just before performing scaling on a frame buffer in which the resolution-changed frame is stored using information for the frame buffer in which the resolution-changed frame is formed.

The information for the frame buffer may be pointer information of the frame buffer.

The streaming image data may be streaming image data of which a resolution is changed according to network speed.

The method may include consecutively displaying the plurality of scaled frames.

According to an aspect of an exemplary embodiment, there is provided an image processing apparatus. The image processing apparatus may include: a communication interfacer configured to receive streaming image data; a decoder configured to decode the received streaming image data to generate a plurality of consecutive frames and detect a resolution-changed frame among the plurality of generated frames; and a scaler configured to scale the plurality of generated consecutive frames using a preset scaling factor; and a controller configured to change the preset scaling factor to a scaling factor corresponding to a resolution of the detected resolution-changed frame just before the detected resolution-changed frame is scaled.

The image processing apparatus may include a plurality of frame buffers configured to store the plurality of frames generated in the decoder. The decoder may include a plurality of decoding buffers configured to decode the received streaming image data to generate the plurality of consecutive frames and store the plurality of generated frames. The decoding unit may store the plurality of stored frames in the plurality of frame buffers according to a sequence of the plurality of frames stored in the plurality of decoding buffers.

The image processing apparatus may include an image processor configured to perform image processing for improvement in picture quality on the plurality of frames stored in the plurality of decoding buffers. The image processor may sequentially store the plurality of image-processed frames in the plurality of frame buffers.

The decoder may detect resolutions of the plurality of generated frames and detect the resolution-changed frame.

The controller may change the preset scaling factor to the scaling factor corresponding to the resolution of the detected resolution-changed frame just before performing scaling on a frame buffer in which the resolution-changed frame is stored using information for the frame buffer in which the resolution-change frame is stored.

The information for the frame buffer may be pointer information of the frame buffer.

The streaming image data may be streaming image data of which a resolution is changed according to network speed.

According to an exemplary embodiment, when a resolution of received streaming image data is changed, there is no mute section in a display screen and thus a natural image can be displayed without a break.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The patent or application file contains at least one drawing executed in color. Copies of this patent or patent application publication with color drawing(s) will be provided by the Office upon request and payment of the necessary fee. The above and/or other aspects will be more apparent by describing in detail exemplary embodiments, with reference to the accompanying drawings, in which:
FIG. 1 illustrates a method of changing a resolution of an image and transmitting a resolution-changed image by a user in the related art;
FIG. 2 illustrates a streaming service providing environment according to an exemplary embodiment;
FIG. 3 illustrates an image processing apparatus according to an exemplary embodiment;
FIG. 4 illustrates an exemplary image processing apparatus;
FIG. 5 illustrates an image processing method according to an exemplary embodiment;
FIG. 6 illustrates an image processing method according to an exemplary embodiment; and
FIG. 7 illustrates an exemplary effect of an image processing method according to an exemplary embodiment.

### DETAILED DESCRIPTION

Exemplary embodiments are described in detail with reference to the accompanying drawings.

Same reference numerals are used for similar elements when they are depicted in different drawings. The disclosure provides a comprehensive understanding of the exemplary embodiments.

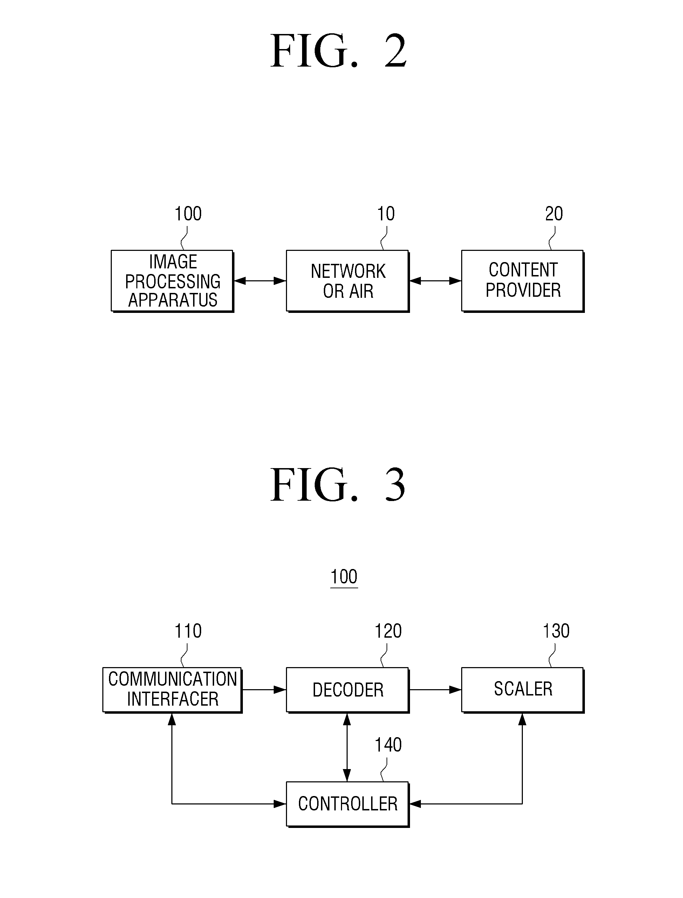

FIG. 2 illustrates a streaming type service providing environment according to an exemplary embodiment. Referring to FIG. 2, a streaming service may be a bidirectional service, but the streaming service may be a unidirectional service such as broadcasting.

When the streaming service is provided in a network environment or over the air 10, the streaming server 20 may encode the streaming data in a suitable format, packetize compressed bit stream, and transmit the packetized result to an image processing apparatus 100. The streaming server 20 may be a content provider supporting VOD streaming contents or a broadcaster supporting a streaming data service.

The image processing apparatus 100 may perform packetization in a reverse processing order of the streaming server 20 to decode the streaming data. The image processing apparatus may decode streaming image data from the received streaming to generate a plurality of consecutive frames and detect a resolution-changed frame among the plurality of generated frames. The image processing apparatus 100 may scale the plurality of generated consecutive frames using a preset scaling factor. In the scaling process, the image processing apparatus 100 may change the preset scaling factor to a scaling factor corresponding to a resolution of the detected resolution-changed frame just before scaling the detected frame and perform the scaling.

The image processing apparatus 100 may be implemented with a high-definition optical disc player such as a BD player or a HD-DVD, a DTV, a settop box, a smart phone, and the like.

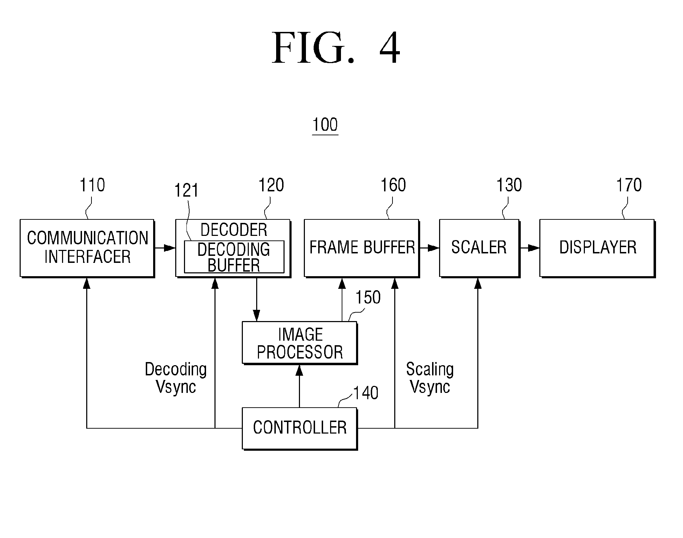

FIG. 3 illustrates an image processing apparatus according to an exemplary embodiment. FIG. 4 illustrates an exemplary image processing apparatus . An image processing apparatus 100 may include a communication interfacer 110, a decoder 120, a decoding buffer 121, a scaler 130, a controller 140, an image processor 150, a frame buffer 160, and a displayer 170.

The image processing apparatus 100 may be implemented to receive streaming data from a streaming content provider in a stream type and simultaneously reproduce or broadcast the streaming data. This process may be referred to as a live streaming, and may be collectively referred to as a VOD service.

The image processing apparatus 100 may be implemented with a content reproducing apparatus configured to reproduce streaming data such as VOD streaming data, a DTV displaying the streaming data, a smart phone, a settop box, and the like. The content reproducing apparatus may be implemented to include a tuner. A content reproducing apparatus may be implemented with a high-definition optical player such as a BD player, or a HD-DVD.

The communication interfacer 110 receives streaming data. The communication interfacer 110 may receive the streaming data including audio data and video data. The communication interfacer 110 may receive streaming contents from the VOD streaming content provider or a broadcaster through a network or air. The received streaming data may be divided into streaming audio data and streaming video data through a signal separator (not shown). The signal separator may transmit the streaming video data to the decoder 120.

The decoder 120 decodes the received streaming video data. The decoder 120 may decode the received streaming video data to generate a plurality of consecutive frames. The decoder 120 may decode the received streaming video data using codec information corresponding to each of the streaming data providers. For example, when the streaming data provider is a service provider that uses H.264 Codec in encoding the streaming video data, the decoder 120 may decode the received streaming video data using H.264 Codec. The codec information corresponding to the content providers may be included in the received streaming data. The codec information corresponding to the content provider may have been previously stored in a storage unit (not shown). Therefore, the decoder 120 may decode the received streaming video signal to generate the plurality of consecutive frames. The plurality of frames generated in the decoder 120 may be a raw data type of a frame on which image processing for improvement in picture quality is not performed.

The decoder 120 may store the plurality of generated frames in a plurality of decoding buffers 121. The plurality of generated frames may be stored in the decoding buffers 121 in units of frames.

The plurality of frames stored in the decoding buffers 121 may be provided to the frame buffer 160 according to a frame sequence based on a first synchronization signal Decoding Vsync provided from the controller 140.

The decoder 120 may detect a resolution-changed frame among the plurality of generated frames. The decoder 120 may detect resolutions of the generated frames to detect the resolution-changed frame.

For example, the VOD service provider such as Netflix, for example, may execute by controlling a resolution of an image according to network speed and transmitting the resolution-controlled image for the user's convenience. Therefore, the resolution of the received streaming video data may be changed. For example, the resolution of the received streaming video data may be changed from HD to standard definition (SD), from HD to HD, from SD to HD, or from SD to SD.

The HD resolution may be defined as a resolution of 1920 x1080 or 1280 x720 and the SD resolution may be defined as a resolution of 720 x 480. However, the resolution may be changed, for example, according to a resolution standard. The resolution change from HD to HD or from SD to SD may be defined as a resolution change between HD and HD having different resolutions from each other or between SD and SD having different resolutions from each other.

The decoder 120 may detect the resolutions of the plurality of generated frames to detect the resolution-changed frame.

The decoder 120 may store the plurality of frames in the plurality of frame buffers 160 according to a sequence of the plurality of frames stored in the plurality of decoding buffers 121. The plurality of frames stored in the plurality of fame buffers 160 may be provided to the scaler 130 based on a second synchronization signal Scaling Vsync provided from the controller 140.

The scaler 130 scales the plurality of generated consecutive frames using a preset scaling factor. The scaler 130 may scale the plurality of consecutive frames stored in the plurality of frame buffers 160 using the preset scaling factor.

For example, the preset scaling factor may be defined as a preset value for scaling the plurality of consecutive frames to be suitable for a display screen. When the image processing apparatus 100 is implemented with a DTV or a smart phone, the preset scaling factor may indicate a value for scaling the plurality of consecutive frames to be suitable for a display screen. When the image processing apparatus 100 is implemented with a content reproducing apparatus or a settop box, the preset scaling factor may indicate a value for scaling the plurality of consecutive frames to be suitable for a display screen of a display apparatus connected to the image processing apparatus.

For example, when the resolution of the received streaming video data is a HD grade (1920 x 1080), the scaling factor may be a first value for scaling the HD (1920 x 1080)-graded resolution to be suitable for the display screen.

When the resolution of the received streaming video data is a HD grade (720 x 480), the scaling factor may be a second value for scaling the HD (720 x 480)-graded resolution to be suitable for the display screen.

Therefore, the scaler 130 may scale the plurality of generated consecutive frames using the preset scaling factor.

The controller 140 controls an overall operation of the image processing apparatus 100. The control unit 140 may partially or wholly control the communication interfacer 110, the decoder 120, the scaler 130, the image processor 150, the frame buffer 160, and the displayer 170.

The controller 140 may provide the first synchronization signal for sequentially providing the frames stored in the decoding buffers 121 to the decoder 110.

The control unit 140 may provide the second synchronization signal for sequentially providing the frames stored in the frame buffer 160 to the frame buffer 160.

The controller 140 may change the preset scaling factor to a scaling factor corresponding to the resolution of the detected frame just before the detected resolution-changed frame is scaled. That is, the controller 140 may change the preset scaling factor to the scaling factor corresponding to the resolution of the detected frame using information for a frame buffer in which the resolution-changed frame is stored just before performing the scaling for the frame buffer in which the detected resolution-changed frame is stored. The information for the frame buffer may be pointer information of the frame buffer. The pointer information may be an index number assigned to the plurality of frame buffers to indentify the plurality of frame buffers.

When the resolution-changed frame stored in a corresponding decoding buffer 121 is stored in a corresponding frame buffer 160 based on the first synchronization signal, the controller 140 may detect the pointer information of the frame buffer 160 in which the resolution-changed frame is stored. The control unit 140 may change the scaling factor of the scaler 160 to the scaling factor corresponding to the resolution of the detected based on the second synchronization signal frame just before the frame stored in the frame buffer corresponding to the detected point information is output to the scaler 160.

The displayer 170 consecutively displays the plurality of scaled frames. The displayer 170 may display contents provided from a content provider, a broadcaster supporting a streaming data service, or the like.

The displayer 170 may be implemented with one or more of a liquid crystal display (LCD), a thin film transistor-liquid crystal display (TFT-LCD), an organic light emitting diode (LED), a flexible display, a three-dimensional (3D) display, and a transparent display, for example.

The displayer 170 may be replaced with an output unit according to an implementing type of the image processing apparatus 100. For example, when the image processing apparatus 100 is implemented with a smart phone or a DTV, the displayer 170 may include any one or more of the disclosed displays. Alternatively, when the image processing apparatus 100 is implemented with a content reproducing apparatus such as a BD player or a settop box, the displayer 170 may be implemented with an output unit configured to provide a scaled signal to a display apparatus connected to the image processing apparatus. The output unit may be formed, for example, in a connector or jack type. The displayer 170 may be connected to a display apparatus such as a DTV through the output unit.

The image processing apparatus 100 may include the image processor 150. The image processor 150 may perform image processing for improvement in picture quality on the plurality of frames stored in the decoding buffers. The frame buffers 160 may store the plurality of image-processed frames. In some cases, the image processor 150 may be omitted.

According to an image processing apparatus according to the exemplary embodiment, when the resolution of the received streaming video data is changed, there is no mute section in the display screen and thus a natural image can be displayed without a break.

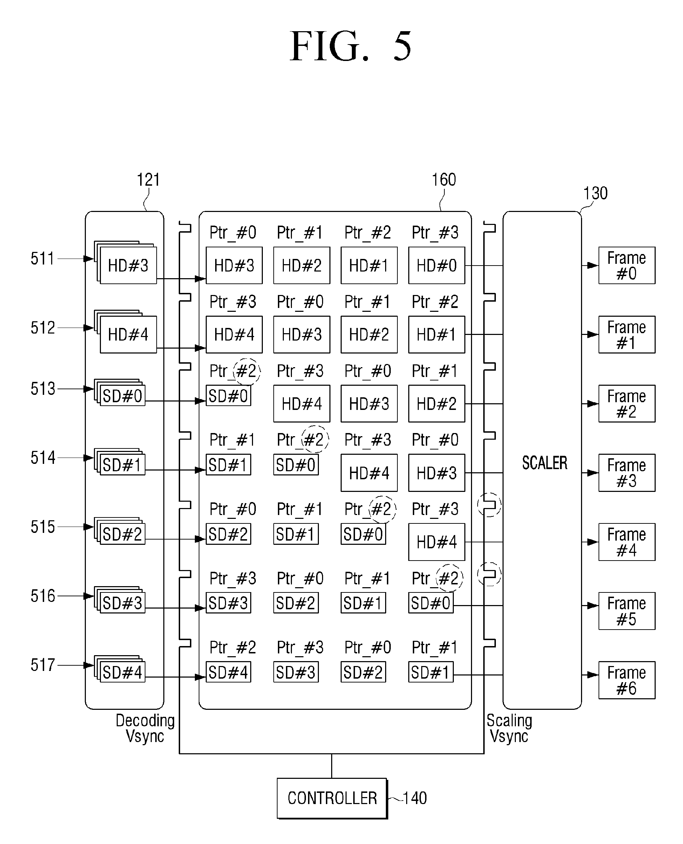

FIG. 5 illustrates an image processing method according to an exemplary embodiment.

FIG. 5 illustrates a decoder buffer 121 that may be configured of three buffers. The frame buffer 160 may be configured of four buffers. However, the number of buffers is illustrative for convenience of description and the number of buffers is not limited thereto. The number of buffers may be changed, for example, according to implementing of the image processing apparatus 100.

As indicated by operation 511, a #3 frame of a HD resolution stored in the decoding buffer 121 may be provided to the frame buffer 160 according to the first synchronization signal Decoding Vsync. The #3 frame of a HD resolution may be stored in a frame buffer of which pointer information is Ptr_#0. Frames, which are sequentially previously provided from decoding buffers 121 in a frame sequence, may have been stored in frame buffers of which pieces of pointing information are Ptr_#1, Ptr_#2, and Ptr_#3. A #0 frame of a HD resolution stored in a frame buffer of which pointer information is Ptr_#1 may be provided to the scaler 130 according to the second synchronization signal Scaling Vsync. The scaler 130 may scale the #0 frame of a HD resolution using a scaling factor corresponding to the HD resolution. Therefore, the scaler 130 may output a scaled frame #0.

As indicated by operation 512, a #4 frame of a HD resolution stored in the decoding buffer 121 may be provided to the frame buffer 160 according to the first synchronization signal Decoding Vsync. The #4 frame of a HD resolution may be stored in a frame buffer of which pointer information is Ptr_#3. Frames, which are sequentially previously provided from decoding buffers 121 in a frame sequence, may have been stored in frame buffers of which pieces of pointing information are Ptr_#0, Ptr_#1, and Ptr_#2. A#1 frame of a HD resolution stored in a frame buffer of which pointer information is Ptr_#2 may be provided to the scaler 130 according to the second synchronization signal Scaling Vsync. The scaler 130 may scale the #1 frame of a HD resolution using a scaling factor corresponding to the HD resolution. Therefore, the scaler 130 may output a scaled frame #1.

As indicated by operation 513, a #0 frame of a SD resolution stored in the decoding buffer 121 may be provided to the frame buffer 160 according to the first synchronization signal Decoding Vsync. The #0 frame of a SD resolution may be stored in a frame buffer of which pointer information is Ptr_#2. The controller 140 may recognize that the pointer information of the frame buffer storing the resolution-changed frame is Ptr_#2. Frames, which are sequentially previously provided from decoding buffers 121 in a frame sequence, may have been stored in frame buffers of which pieces of pointing information are Ptr_#3, Ptr_#0, and Ptr_#1. A #2 frame of a HD resolution stored in a frame buffer of which pointer information is Ptr_#1 may be provided to the scaler 130 according to the second synchronization signal Scaling Vsync. The scaler 130 may scale the #2 frame of a HD resolution using a scaling factor corresponding to the HD resolution. Therefore, the scaler 130 may output a scaled frame #2.

As indicated by operation 514, a#1 frame of a SD resolution stored in the decoding buffer 121 may be provided to the frame buffer 160 according to the first synchronization signal Decoding Vsync. The #1 frame of a SD resolution may be stored in a frame buffer of which pointer information is Ptr_#1. Frames, which are sequentially previously provided from decoding buffers 121 in a frame sequence, may have been stored in frame buffers of which pieces of pointing information are Ptr_#2, Ptr_#3, and Ptr_#0. A #3 frame of a HD resolution stored in a frame buffer of which pointer information is Ptr_#0 may be provided to the scaler 130 according to the second synchronization signal Scaling Vsync. The scaler 130 may scale the #3 frame of a HD resolution using a scaling factor corresponding to the HD resolution. Therefore, the scaler 130 may output a scaled frame #3.

As indicated by operation 515, a #2 frame of a SD resolution stored in the decoding buffer 121 may be provided to the frame buffer 160 according to the first synchronization signal Decoding Vsync. The #2 frame of a SD resolution may be stored in a frame buffer of which pointer information is Ptr_#0. Frames, which are sequentially previously provided from decoding buffers 121 in a frame sequence, may have been stored in frame buffers of which pieces of pointing information are Ptr_#1, Ptr_#2, and Ptr_#3. A #4 frame of a HD resolution stored in a frame buffer of which pointer information is Ptr_#3 may be provided to the scaler 130 according to the second synchronization signal Scaling Vsync. The scaler 130 may scale the #4 frame of a HD resolution using a scaling factor corresponding to the HD resolution. Therefore, the scaler 130 may output a scaled frame #4.

As indicated by 516, a #3 frame of a SD resolution stored in the decoding buffer 121 may be provided to the frame buffer 160 according to the first synchronization signal Decoding Vsync. The #3 frame of a SD resolution may be stored in a frame buffer of which pointer information is Ptr_#3. Frames, which are sequentially previously provided from decoding buffers 121 in a frame sequence, may have been stored in frame buffers of which pieces of pointing information are Ptr_#0, Ptr_#1, and Ptr_#2.

The controller 140 may calculate a point of time when the scaling factor of the scaler 130 is changed using the recognized point information Ptr_#2. The controller 140 may change the scaling factor of the scaler 130 to a scaling factor corresponding to the SD resolution from a point of time when the #4 frame of a HD resolution stored in the frame buffer having the point information Ptr_#3, which is a previous frame buffer, is provided to the scaler 130 to a point of time when the #0 frame of a SD resolution stored in the frame buffer having the recognized point information Ptr_#2 is provided to the scaler 130 based on the second synchronization signal.

A #0 frame of a SD resolution stored in a frame buffer of which pointer information is Ptr_#2 may be provided to the scaler 130 according to the second synchronization signal Scaling Vsync. At The scaler 130 may scale the #0 frame of a SD resolution using a scaling factor corresponding to the SD resolution. Therefore, the scaler 130 may output a scaled frame #5.

As indicated by operation 517, a #4 frame of a SD resolution stored in the decoding buffer 121 may be provided to the frame buffer 160 according to the first synchronization signal Decoding Vsync. The #4 frame of a SD resolution may be stored in a frame buffer of which pointer information is Ptr_#2. Frames, which are sequentially previously provided from decoding buffers 121 in a frame sequence, may have been stored in frame buffers of which pieces of pointing information are Ptr_#3, Ptr_#0, and Ptr_#1. A#1 frame of a SD resolution stored in a buffer frame of which pointer information is Ptr_#1 may be provided to the scaler 130 according to the second synchronization signal Scaling Vsync. The scaler 130 may scale the #1 frame of a SD resolution using a scaling factor corresponding to the SD resolution. Therefore, the scaler 130 may output a scaled frame #6.

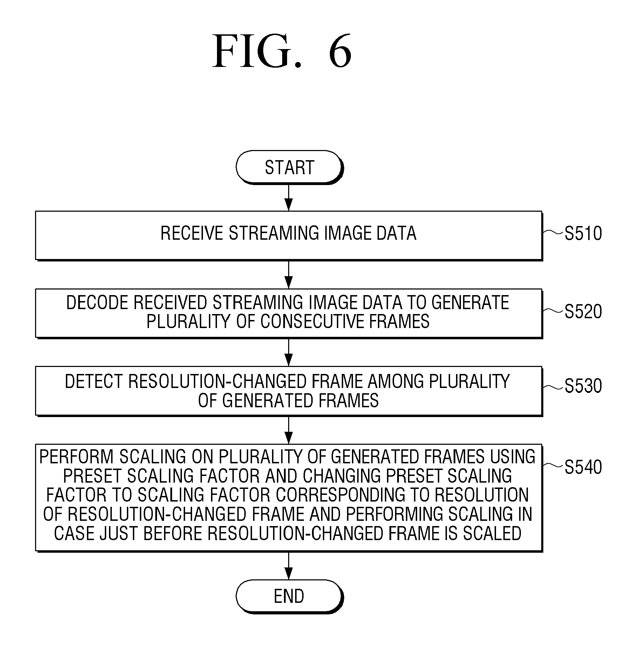

FIG. 6 illustrates an image processing method according to an exemplary embodiment. The image processing apparatus may receive streaming video data (S510). The streaming video data may be streaming video data of which a resolution is changed according to network speed.

The image processing apparatus decodes the received streaming video data to generate a plurality of consecutive frames (S520). The generating a plurality of frames may include decoding the received streaming video data to generate the plurality of frames, storing the plurality of generated frames in a plurality of decoding buffers, and sequentially storing the plurality of stored frames in the plurality of frame buffers in a frame sequence.

The generating a plurality of frames may include performing image processing for improvement in picture quality on the plurality of frames stored in the plurality of decoding buffers. The storing the plurality of frames in the plurality of frame buffers may include sequentially storing the plurality of image-processed frames in the plurality of frame buffers.

The image processing apparatus detects a resolution-changed frame among the plurality of generated frames (S530). The detecting may include detect resolutions of the plurality of frames and detect the resolution-changed frame in the process of decoding the received streaming video data.

The image processing apparatus may perform scaling on the generated consecutive frames using a preset scaling factor. The image processing apparatus changes the preset scaling factor to a scaling factor corresponding to the resolution of the resolution-changed frame to perform the scaling in the case just before the resolution-changed frame is scaled (S540). The scaling may include changing the preset scaling factor to the scaling factor corresponding to the resolution of the detected resolution-changed frame just before the scaling is performed on the frame buffer in which the resolution-changed frame is stored using information for the frame buffer in which the resolution-changed frame is stored. The information for the frame buffer may be pointer information of the frame buffer.

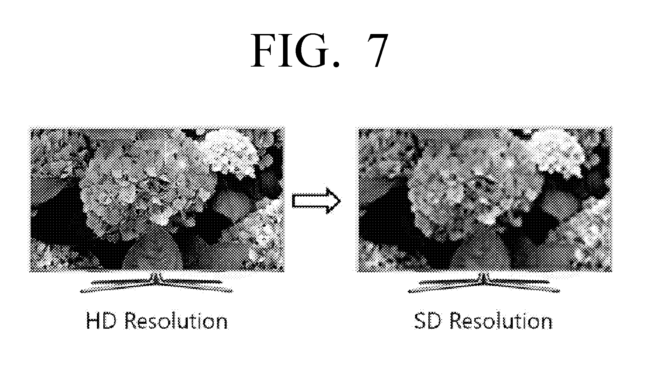

FIG. 7 illustrates an exemplary effect of the image processing method according to an exemplary embodiment. That is, according to the image processing method of the exemplary embodiment, as illustrated in FIG. 7, when the resolution of the received streaming video data is changed, there is no mute section in the display screen, and a natural image is displayed without a break.

The foregoing exemplary embodiments and advantages are merely exemplary and are not to be construed as limiting the present inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. An image processing method of an image processing apparatus, the method comprising:
receiving streaming image data (S510);
decoding the received streaming image data to generate a plurality of consecutive frames (S520);
detecting a resolution-changed frame among the plurality of generated consecutive frames (S530); and
scaling the plurality of generated consecutive frames using a preset scaling factor (S540),
wherein the scaling includes changing the preset scaling factor to a scaling factor corresponding to a resolution of the detected resolution-changed frame just before the detected resolution-changed frame is scaled.

2. The method as claimed in claim 1, wherein the generating a plurality of frames includes:
decoding the received streaming image data to generate the plurality of frames and storing the plurality of generated frames in a plurality of decoding buffers; and
sequentially storing the plurality of stored frames in a plurality of frame buffers according to a frame sequence.

3. The method as claimed in claim 2, wherein the generating a plurality of frames further includes performing image processing for improvement in picture quality on the plurality of frames stored in the plurality of decoding buffers,
wherein the storing the plurality of stored frames in the plurality of frame buffers includes sequentially storing the plurality of image-processed frames in the plurality of frame buffers.

4. The method as claimed in claim 2 or 3, wherein the detecting a resolution-changed frame includes detecting resolutions of the plurality of frames and detecting the resolution-changed frame among the plurality of frames, in the decoding the received streaming image data.

5. The method as claimed in claim 4, wherein the scaling includes changing the preset scaling factor to the scaling factor corresponding to the resolution of the detected resolution-changed frame just before performing scaling on a frame buffer in which the resolution-changed frame is stored using information for the frame buffer in which the resolution-changed frame is formed.

6. The method as claimed in claim 5, wherein the information for the frame buffer is pointer information of the frame buffer.

7. The method as claimed in any one of claims 1 to 6, wherein the streaming image data is streaming image data of which a resolution is changed according to network speed.

8. The method as claimed in any one of claims 1 to 7, further comprising consecutively displaying the plurality of scaled frames.

9. An image processing apparatus (100) comprising:
a communication interfacer (110) configured to receive streaming image data;
a decoder (120) configured to decode the received streaming image data to generate a plurality of consecutive frames and detect a resolution-changed frame among the plurality of generated frames; and
a scaler (130) configured to scale the plurality of generated consecutive frames using a preset scaling factor; and
a controller (140) configured to change the preset scaling factor to a scaling factor corresponding to a resolution of the detected resolution-changed frame just before the detected resolution-changed frame is scaled.

10. The image processing apparatus as claimed in claim 9, further comprising a plurality of frame buffers configured to store the plurality of frames generated in the decoder,
wherein the decoder includes a plurality of decoding buffers configured to decode the received streaming image data to generate the plurality of consecutive frames and store the plurality of generated frames,
wherein the decoder stores the plurality of stored frames in the plurality of frame buffers according to a sequence of the plurality of frames stored in the plurality of decoding buffers.

11. The image processing apparatus as claimed in claim 10, further comprising an image processor configured to perform image processing for improvement in picture quality on the plurality of frames stored in the plurality of decoding buffers,
wherein the image processor sequentially stores the plurality of image-processed frames in the plurality of frame buffers.

12. The image processing apparatus as claimed in claim 10 or 11, wherein the decoder detects resolutions of the plurality of generated frames and detects the resolution-changed frame.

13. The image processing apparatus as claimed in claim 12, wherein the controller changes the preset scaling factor to the scaling factor corresponding to the resolution of the detected resolution-changed frame just before performing scaling on a frame buffer in which the resolution-changed frame is stored, using information for the frame buffer in which the resolution-change frame is stored.

14. The image processing apparatus as claimed in claim 13, wherein the information for the frame buffer is pointer information of the frame buffer.

15. The image processing apparatus as claimed in any one of claims 9 to 14, wherein the streaming image data is streaming image data of which a resolution is changed according to network speed.
